# EUROPÄISCHE PATENTSCHRIFT

(11) **EP 3 896 223 B1**
(45) Veröffentlichungstag und Bekanntmachung des Hinweises auf die Patenterteilung: **18.12.2024**
(21) Anmeldenummer: 20169883.4
(22) Anmeldetag: 16.04.2020
(51) Int. Cl.: E01C 19/00, E01C 19/28, E01C 19/48

(54) **VERFAHREN ZUM FERTIGEN EINES STRASSENBELAGS, ASPHALTIERUNGSSYSTEM UND VERDICHTER**
METHOD FOR MANUFACTURING A ROAD PAVING, ASPHALTING SYSTEM AND COMPACTOR
PROCÉDÉ DE FINITION D'UN REVÊTEMENT ROUTIER , SYSTÈME D'ASPHALTAGE ET COMPACTEUSE

(43) Veröffentlichungstag der Anmeldung: 20.10.2021
(73) Patentinhaber: Joseph Vögele AG, 67067 Ludwigshafen (DE)
(72) Erfinder: PAWLIK, Dr. Christian, 67435 Neustadt (DE)
(74) Vertreter: Grünecker Patent- und Rechtsanwälte PartG mbB

(56) Entgegenhaltungen:
- WO-A1-2019/181817
- CN-A- 108 130 849
- DE-A1- 102016 001 983
- DE-A1- 102016 002 064
- DE-A1- 102018 124 513
- JP-A- 2003 184 131

## Beschreibung

Die vorliegende Erfindung betrifft ein Verfahren zum Fertigen eines Straßenbelags, ein Asphaltierungssystem umfassend einen Straßenfertiger und einen Verdichter und einen Verdichter zum Komprimieren eines Straßenbelags.

Beim Einbau von Straßenbelagschichten folgt üblicherweise mindestens ein Verdichter in Form eines Walzenfahrzeugs einem Straßenfertiger, um den mittels der Einbaubohle des Straßenfertigers eingebauten Straßenbelag zu verdichten. Die Asphalttemperatur des neu aufgetragenen Straßenbelags ist dabei eine wichtige Prozessgröße für das erste Einfahren des Verdichters auf den frisch eingebauten Straßenbelag. Ein zu frühes Einfahren in noch zu heißen Asphalt führt zu bautechnischen Mängeln, beispielsweise zu Walzrissen. Ein zu spätes Einfahren führt dazu, dass der Asphalt bereits stark abgekühlt ist und weniger Zeit für die Walzverdichtung zur Verfügung steht. Es gilt also, genau den richtigen Zeitpunkt beziehungsweise die richtige Temperatur für den Beginn der Walzverdichtung zu ermitteln.

Aus der EP 3 124 698 B1 ist ein System bekannt, bei welchem dem Bediener des Walzverdichters der Bereich des neuen Straßenbelags, welcher zum Walzen vorgesehen ist, auf dem neuen Stra-ßenbelag markiert wird, beispielsweise durch einen Laser. Aus der DE 11 2015 000 363 T5 ist ein System bekannt, bei welchem auf dem Verdichter Anzeigevorrichtungen vorhanden sind, welche dem Bediener Informationen zu den zu verdichtenden Bereichen graphisch darstellen. Beide Systeme weisen jedoch Nachteile auf, wie zum Beispiel einen nicht einfach zu realisierenden Aufbau oder die Schwierigkeit für einen Bediener, Anzeigevorrichtungen zusätzlich zum Einbaubetrieb zu beachten. Ein weiteres Asphaltierungssystem, bei welchem Temperaturdaten des Einbaumaterials berücksichtigt werden, ist aus der US 8,099,218 B2 bekannt. Aus der DE 10 2018 124 513 A1 ist ein Straßenbausystem mit Einbaumaschine und Verdichtungsmaschine bekannt, bei welchem mittels Sensor Temperaturdaten eines Einbaumaterials erfasst werden, um daraus eine Verdichtungsgrenzkarte zu erstellen und darauf basierend die Verdichtungsmaschine teilweise automatisch zu lenken. Aus der JP 2003 184131 A ist ein Steuerknüppel für eine Baumaschine bekannt, welcher in Abhängigkeit eines Betriebszustands vibrieren kann.

Aufgabe der vorliegenden Erfindung ist es, ein verbessertes System zur Verfügung zu stellen, welches einem Bediener eines Verdichters die zu befahrenden Bereiche eines Straßenbelags vermittelt.

Die Aufgabe wird gelöst durch ein Verfahren gemäß Anspruch 1, ein Asphaltierungssystem gemäß Anspruch 11 und einen Verdichter gemäß Anspruch 13. Vorteilhafte Weiterbildungen der Erfindung sind in den Unteransprüchen angegeben.

Ein erfindungsgemäßes Verfahren zum Fertigen eines Straßenbelags durch einen Straßenfertiger und einen Verdichter umfasst folgende Verfahrensschritte:
- Einbau eines Straßenbelags mittels einer Einbaubohle des Straßenfertigers,
- Definieren eines Walzvorgabefeldes mittels eines elektronischen Datenverarbeitungssystems,
- Bestimmen einer Relativposition des Verdichters in Bezug zu dem Walzvorgabefeld,
- Erzeugen einer Vibration eines Fahrhauptschalters des Verdichters, in Abhängigkeit von der Relativposition zu dem Walzvorgabefeld.

Das Walzvorgabefeld gibt den Bereich der neu eingebauten Straßenbelagschicht an, der momentan für die Nachverdichtung geeignet ist, da er die richtige Temperatur aufweist und somit von dem Verdichter, beispielsweise einem Walzverdichter, befahren werden soll. Ein zu frühes Einfahren in das unverdichtete und noch zu heiße Material würde ein Art Bugwelle erzeugen und so den Straßenbelag beschädigen. Ein zu spätes Einfahren in bereits zu stark erkaltetes Material würde zu Rissen führen, da der Straßenbelag nicht mehr elastisch genug ist. Die Relativposition des Verdichters zu dem Walzvorgabefeld drückt aus, ob sich der Verdichter innerhalb oder außerhalb des Walzvorgabefelds befindet. Zudem kann die exakte Position des Verdichters in Bezug zu dem Walzvorgabefeld erfasst sein, so dass die Abstände zu den Rändern des Walzvorgabefelds bekannt sind, sowohl wenn sich der Verdichter außerhalb oder innerhalb befindet. Die Vibration des Fahrhauptschalters des Verdichters kann dann einsetzen, wenn sich der Verdichter in einem Bereich befindet, der nicht befahren werden soll. Zusätzlich kann die Vibration bereits dann einsetzen, wenn der Verdichter sich zwar noch in einem erlaubten Bereich befindet, sich aber einem momentan für das Verdichten nicht vorgesehenen Bereich annähert. Dabei kann die Vibration allmählich stärker werden, je näher sich der Verdichter diesem Bereich nähert.

Der Bediener des Verdichters bekommt also eine direkte haptische Rückmeldung bezüglich seiner Position. Dazu muss er keine weiteren optischen oder akustischen Signale beachten, sondern kann sich vollständig auf das Bedienen der Maschine konzentrieren. Der Fahrhauptschalter ist das zentrale Bediengerät des Verdichters und mit ihm wird die Vorwärts- und Rückwärtsbewegung gesteuert. Zudem kann er in Form eines "Joysticks" gebildet sein und auch zur Steuerung der seitlichen Lenkbewegung dienen. Da der Fahrhauptschalter im Arbeitsbetrieb stets von dem Bediener umgriffen wird, um die Fahrt des Verdichters zu steuern, nimmt der Bediener das Vibrationssignal in jedem Fall wahr ohne abgelenkt zu sein, wie dies bei der Überwachung von optischen Anzeigen der Fall wäre. Auch tritt nicht der Fall ein, dass das Vibrationssignal nicht mehr beachtet werden würde, wie dies bei akustischen Signalen oft auftritt, welche in der Wahrnehmung ausgeblendet werden.

Insbesondere wenn bereits beim Annähern an den Rand des erlaubten Bereichs ein Vibrationssignal gegeben wird, welches zusätzlich noch allmählich stärker werden kann, wird die Beschädigung des Straßenbelags verhindert, da der Bediener die Fahrt rechtzeitig stoppen oder umkehren kann.

Die Programmierung der Signalgebung durch Vibration kann dabei vielerlei Parameter berücksichtigen. So kann beispielsweise die Vibration in Abhängigkeit der Richtung oder Seite des Walzvorgabefelds erfolgen, an welcher dieses verlassen wird oder der sich angenähert wird. So kann eine Vibration unterbleiben, wenn der Verdichter das Walzvorgabefeld auf der dem Straßenfertiger abgewandten Seite verlässt, da dort ohnehin der Straßenbelag bereits verdichtet und gefestigt ist. Hingegen kann ein Warnsignal durch Vibration gegeben werden, wenn sich der Verdichter dem dem Straßenfertiger zugewandten Rand des Walzvorgabefelds annähert, da zwischen Straßenfertiger und Walzvorgabefeld sich ein noch zu heißer Bereich des frisch eingebauten Straßenbelags befindet, welcher durch zu frühes Walzen beschädigt werden würde. Genauso kann jedoch auch an jeder Seite des Walzvorgabefelds ein Signal durch Vibration erfolgen. Das Walzvorgabefeld ist typischerweise sowohl durch eine in Fahrtrichtung des Straßenfertigers gesehene vordere und hintere Begrenzung definiert, kann jedoch auch durch seitliche Ränder begrenzt sein. Die seitlichen Ränder können insbesondere beim parallelen Einbau zweier oder mehrerer Fahrbahnen relevant sein, besonders, wenn zwei Straßenfertiger nebeneinander, z.B. "Heiss-an-Heiss", einbauen.

Erfindungsgemäß wird eine Geschwindigkeit und/oder eine Verdichtungsleistung des Verdichters bestimmt, sowie eine Vibration des Fahrhauptschalters des Verdichters in Abhängigkeit von der bestimmten Geschwindigkeit und/oder der bestimmten Verdichtungsleistung erzeugt. Eine zu schnelle Bewegung des Verdichters auf dem Straßenbelag würde starke Bremsungen und Beschleunigungen beim Richtungswechsel bedeuten, was ebenfalls zum Erzeugen einer Bugwelle, also einem Aufschieben und damit einer Beschädigung des Straßenbelags führen würde. Eine zu hohe Verdichtungsleistung, also eine zu starke Vibration der Walzrollen, würde Unebenheiten und Abdrücke im Straßenbelag hinterlassen und eine Entmischung der Bestandteile des Straßenbelags, beispielsweise ein nach oben Wandern des Bitumenanteils, zur Folge haben. Eine Überwachung der Parameter und entsprechende haptische Rückmeldung an den Bediener über die Vibration des Fahrhauptschalters kann diese Beeinträchtigungen der Einbauqualität verhindern, indem der Bediener die Geschwindigkeit und die Verdichtungsleistung anpasst.

Erfindungsgemäß wird das Vibrationsmuster des Fahrhauptschalters, also insbesondere Frequenz und Amplitude, in Abhängigkeit der Art des Betriebsparameters wie Geschwindigkeit, Position, Verdichtungsleistung variiert, so dass der Bediener erkennt, welchen Betriebsparameter er korrigieren soll.

Vorzugsweise erfolgt die Bestimmung der Relativposition des Verdichters durch Erfassen eines GNSS-Signals und/oder durch Bestimmen eines Abstands des Verdichters zu dem Straßenfertiger. Entsprechend kann auch das Walzvorgabefeld entweder durch seine globalen Ortskoordinaten oder durch seine Lage in Relation zu dem Straßenfertiger definiert sein. Die Relativposition kann also entweder durch Berechnung im globalen Ortskoordinatensystem oder durch Berechnung im durch den Straßenfertiger definierten Koordinatensystem bestimmt werden. In letzterem Fall können auch die mittels GNSS empfangenen absoluten Ortskoordinaten des Verdichters zunächst in eine Relativposition in Bezug zum Straßenfertiger umgerechnet werden. Die Ortskoordinatenbestimmung mittels GNSS-Signal kann durch Antennen, die am Verdichter angeordnet sind, erfolgen. Ebenso kann eine Ortskoordinatenbestimmung für den Straßenfertiger erfolgen. Die Bestimmung der Relativposition kann z.B. durch Lasermessung, Radarmessung oder ähnlichem erfolgen, wobei das Messgerät am Straßenfertiger, am Verdichter oder extern angeordnet sein kann. Es ist also auch möglich, die Relativposition des Verdichters zum Straßenfertiger und damit zum Walzvorgabefeld mit lokalen Systemen und ohne GNSS zu bestimmen. Als "Abstand" kann eine zweckmäßige Entfernung zu einem Punkt am Straßenfertiger definiert werden, also z.B. ein Verbindungsvektor Straßenfertiger - Verdichter. Ebenso kann der Abstand z.B. eine Entfernung parallel zur Fahrtrichtung bis zur Hinterkante des Straßenfertigers bezeichnen.

In einer zweckmäßigen Variante wird das Walzvorgabefeld mittels eines elektronischen Datenverarbeitungssystems auf dem Straßenfertiger oder eines externen elektronischen Datenverarbeitungssystems definiert und an den Verdichter übertragen. Ein Datenverarbeitungssystem des Straßenfertigers kann beispielsweise an der Zugmaschine oder an der Einbaubohle angeordnet sein. Ein externes Datenverarbeitungssystem kann beispielsweise ein mit Funk verbundener Baustellenmanagement-Computer sein. Eine Datenverarbeitung auf dem Straßenfertiger ist insbesondere deswegen von Vorteil, da weitere Sensoren, z.B. zum Erfassen einer Fahrgeschwindigkeit des Straßenfertigers, zur Messung der Asphalttemperatur etc. üblicherweise an dem Straßenfertiger angeordnet sind und so die Daten direkt eingelesen werden können. Eine externe Datenverarbeitung kann leichter wartbar und programmierbar sein. Beide Varianten ermöglichen es, den Aufbau des Verdichters einfach zu halten, da dann lediglich die Systeme zum Empfangen und Ausführen der Steuersignale für den Fahrhauptschalter dort vorhanden sein müssen. Ebenso ist es jedoch auch möglich, alle oder wesentliche Berechnungen für das Walzvorgabefeld mittels eines Datenverarbeitungssystems auf dem Verdichter durchzuführen.

Erfindungsgemäß wird das Walzvorgabefeld anhand eines mittels Simulationsberechnung erzeugten Temperaturbilds festgelegt. Zusätzlich kann das Walzvorgabefeld anhand eines von durch ein oder mehrere Sensoren ermittelten Temperaturbilds des eingebauten Straßenbelags festgelegt werden.

Thermographiemodule, Pyrometer oder andere geeignete Arten von Temperatursensoren können flächig oder punktuell, an einem oder mehreren Messpunkten die Temperatur des neu eingebauten Straßenbelags hinter dem Straßenfertiger messen. Die Temperatursensoren sind dabei zweckmäßig am Straßenfertiger bzw. der Einbaubohle angeordnet. Ebenso ist es aber auch möglich, die Temperatur mit externen Geräten oder mit an dem Verdichter angeordneten Sensoren zu erfassen. Die Berechnung kann den Temperaturverlauf durch Abkühlen des Straßenbelags beschreiben und kann dabei andere Messwerte, wie z.B. die Umgebungstemperatur und/oder Windgeschwindigkeit, berücksichtigen. Ebenso können dabei Materialeigenschaften des Einbaumaterial, wie z.B. der Bitumenanteil oder die Körnung, berücksichtigt werden In den erwähnten Varianten werden vorzugsweise Datenpunkte in zweidimensionaler Anordnung erzeugt, anhand derer das Walzvorgabefeld definiert wird. Ebenso ist es jedoch auch möglich, lediglich eine eindimensionale Linie von Mess- oder Datenpunkten entlang der Fahrtrichtung zu erzeugen, anhand der die zu befahrenden Abschnitte, definiert durch den Abstand zu der Einbaubohle bzw. zu dem Straßenfertiger, definiert werden. In einer bevorzugten Variante wird zum Festlegen des Walzvorgabefelds das gemessene oder berechnete Temperaturbild mit gespeicherten Temperaturdaten verglichen. So kann anhand gespeicherter Temperaturober- und/oder Untergrenzen das Walzvorgabefeld definiert werden. Zweckmäßig wird die Temperatur des Einbaumaterials mittels eines Sensors gemessen, bevor das Einbaumaterial durch die Einbaubohle des Straßenfertigers eingebaut wird. Die so erhaltenen Temperaturwerte können als Grundlage für die oben erwähnte Berechnung des zeitlichen Temperaturverlaufs dienen.

Bevorzugt werden Daten, welche das Walzvorgabefeld darstellen, periodisch oder kontinuierlich auf dem Verdichter aktualisiert. So kann das Walzvorgabefeld beispielsweise mit dem Straßenfertiger mitbewegt werden, wenn dies der gemessenen Temperaturentwicklung des Straßenbelags entspricht. Ebenso kann das Walzvorgabefeld vergrößert oder verkleinert werden, wenn dies z.B. die Messwerte so anzeigen oder die Simulationsberechnung dies vorgibt. Ebenso kann, beispielsweise durch Aufzeichnen der Positionsdaten des Verdichters anhand des GNSS-Signals, die bereits gewalzte Fläche berücksichtigt werden.

In einer weiteren vorteilhaften Variante umfasst die Vibration des Fahrhauptschalters mehrere Vibrationsmuster und/oder -stärken, welche in Abhängigkeit von der Relativposition des Verdichters zu dem Walzvorgabefeld erzeugt werden. So kann sich z.B. die Vibrationsfrequenz von einer nahe der Mitte des Walzvorgabefelds befindlichen Position zum Rand hin und darüber hinaus erhöhen. So kann beim Annähern an den Rand in noch weiterer Entfernung eine Vibration, welche als einzelne Klopfimpulse wahrgenommen wird, und kurz vor, z.B. einen halben Meter, und ab dem Rand eine hochfrequente Vibration anliegen. Ebenso kann die Amplitude, also die Stärke der Auslenkung des Fahrhauptschalters, variiert werden.

Vorzugsweise werden mittels einer an dem Verdichter angeordneten Anzeige optische Informationen zur Position des Verdichters und/oder zu einer verbleibenden Walzstrecke und/oder zu einer bereits zurückgelegten Walzstrecke angezeigt. So erhält der Bediener zusätzliche exakte Informationen, nach denen er den Walzbetrieb durchführen und planen kann.

In einer zweckmäßigen Variante werden ein oder mehrere Betriebszustände des Verdichters, insbesondere eine Antriebsgeschwindigkeit, in Abhängigkeit von der Relativposition des Verdichters zu dem Walzvorgabefeld automatisch gesteuert. So kann z.B. automatisch die Geschwindigkeit verringert werden, wenn sich der Verdichter dem Rand des Walzvorgabefeldes von innen nähert. Ebenso ist es denkbar, den Verdichter an einer bestimmten Position automatisch zu stoppen, z.B. am Rand des Walzvorgabefeldes. Es ist auch denkbar, automatisch die Lenkung zu beeinflussen, damit der Verdichter das Walzvorgabefeld an einem seitlichen Rand nicht verlässt.

Ein erfindungsgemäßes Asphaltierungssystem umfasst einen Straßenfertiger und einen Verdichter, wobei der Straßenfertiger eine Einbaubohle umfasst, welche dazu konfiguriert ist, einen Stra-ßenbelag einzubauen. Der Straßenfertiger umfasst des Weiteren einen Temperatursensor, welcher ausgebildet ist, eine Temperatur des eingebauten Straßenbelags zu messen, und ein elektronisches Datenverarbeitungssystem, welches dazu konfiguriert ist, ein Walzvorgabefeld zu bestimmen und einen Sender, welcher dazu ausgebildet ist, die Daten des Walzvorgabefelds an den Verdichter zu übertragen. Der Verdichter umfasst einen Empfänger zum Empfangen der Daten und einen Fahrhauptschalter, der eine Vibrationseinheit umfasst, welche dazu konfiguriert ist, basierend auf den Daten des Walzvorgabefelds angesteuert zu werden und in Abhängigkeit von einer bestimmten Relativposition des Verdichters zu dem Walzvorgabefeld sowie von einer bestimmten Geschwindigkeit und/oder einer bestimmten Verdichtungsleistung des Verdichters angesteuert zu werden, wobei das Vibrationsmuster des Fahrhauptschalters in Abhängigkeit der Art des Betriebsparameters wie Geschwindigkeit, Position, Verdichtungsleistung variiert.

Die Einbaubohle kann Ausziehteile umfassen und/oder zur Anbringung von Verbreiterungsteilen geeignet sein. Der Temperatursensor kann geeignet sein, flächige Messungen der Temperatur des Straßenbelags durchzuführen, ähnlich einer Wärmebildkamera oder eines Thermographiemoduls, und/oder kann geeignet sein, punktuelle Messungen vorzunehmen. Die Temperaturmessungen können vor, an oder hinter der Einbaubohle vorgenommen werden.

Vorzugsweise umfasst der Verdichter ein elektronisches Datenverarbeitungssystem, welches dazu konfiguriert ist, die Daten des Walzvorgabefelds zu verarbeiten und Steuerungssignale an die Vibrationseinheit des Fahrhauptschalters zu senden. Das elektronische Datenverarbeitungssystem kann dazu einen Prozessor sowie einen Datenspeicher umfassen.

Ein erfindungsgemäßer Verdichter zum Komprimieren eines Straßenbelags umfasst ein elektronisches Datenverarbeitungssystem, einen Bedienstand und einen Fahrhauptschalter, wobei der Fahrhauptschalter eine Vibrationseinheit umfasst, welche dazu konfiguriert ist, in Abhängigkeit von von dem Datenverarbeitungssystem empfangenen Signalen zu vibrieren. Dabei können Frequenz und Amplitude der Vibration variabel sein. Das Datenverarbeitungssystem ist dazu konfiguriert Steuerungssignale an die Vibrationseinheit des Fahrhauptschalters zu senden, sodass das Vibrationsmuster des Fahrhauptschalters in Abhängigkeit der Art des Betriebsparameters wie Geschwindigkeit, Position, Verdichtungsleistung variiert.

Im Folgenden werden die Ausführungsbeispiele eines Verfahrens zum Fertigen eines Straßenbelags durch einen Straßenfertiger und einen Verdichter anhand der Figuren näher beschrieben.

Dabei zeigen
- Figur 1:: eine schematische Darstellung eines Asphaltierungssystems mit Straßenfertiger und Verdichter,
- Figur 2:: eine seitliche schematische Darstellung eines Asphaltierungssystems,
- Figur 3:: eine seitliche schematische Darstellung eines Fahrhauptschalters,
- Figur 4:: eine schematische Darstellung eines Temperaturbilds eines Straßenbelags.

Einander entsprechende Komponenten sind in den Figuren jeweils mit gleichen Bezugszeichen versehen.

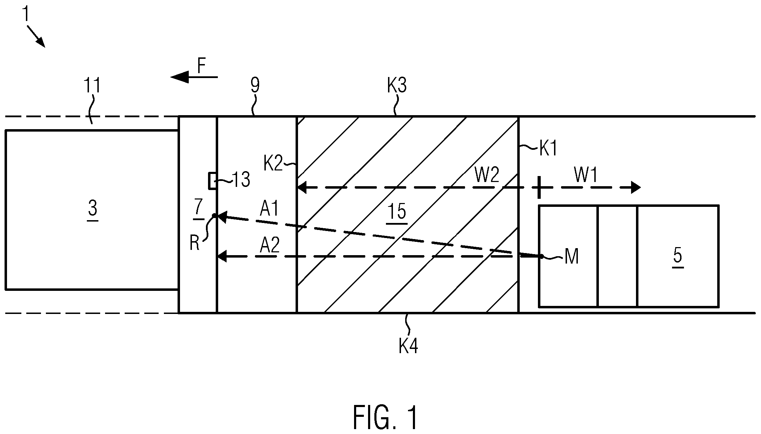

Figur 1 zeigt eine schematische Darstellung eines Asphaltierungssystems 1 mit einem Straßenfertiger 3 und einem Verdichter 5. Der Straßenfertiger 3 umfasst eine Einbaubohle 7, mit welcher ein Straßenbelag 9 auf einem Planum 11 eingebaut wird. An der Einbaubohle 7 oder an einer anderen Stelle des Straßenfertigers 3, wie zum Beispiel an einer hinteren Seite eines Dachs eines Bedienstands, ist ein Temperatursensor 13 angeordnet, welcher die Temperatur des frisch eingebauten Straßenbelags 9 misst. Anhand der gemessenen Temperaturwerte, sowie zusätzlich oder alternativ durch Simulationsberechnung, wird ein Walzvorgabefeld 15 berechnet. Durch Erfassen eines GNSS-Signals oder durch Bestimmen eines Abstands des Verdichters 5 zu dem Straßenfertiger 3 wird eine Relativposition des Verdichters 5 in Bezug zu dem Walzvorgabefeld 15 ermittelt. Dabei kann beispielsweise ein vorderer Mittelpunkt M des Verdichters 5 als Referenzpunkt dienen, sowie die Abmessungen des Verdichters 5 berücksichtigt werden. Als Abstand des Verdichters 5 zu dem Straßenfertiger 3 kann beispielsweise eine direkte Verbindungsgerade A1 von einem vorderen Mittelpunkt M des Verdichters 5 zu einem Referenzpunkt R des Straßenfertigers 3, welcher z.B. ebenfalls mittig liegt, definiert werden. Ebenso wäre es möglich, eine zur Fahrtrichtung F parallele Verbindungsgerade A2 zum Straßenfertiger 3 als Abstand zu definieren. Die Ausgabe der Vibrationssignale an einen Fahrhauptschalter des Verdichters 5 kann in Abhängigkeit der Position des Verdichters 5 in Bezug zu einer hinteren Kante K1 und/oder einer vorderen Kante K2 und/oder einer rechten Kante K3 und/oder einer linken Kante K4 des Walzvorgabefeldes 15 erfolgen. Die seitlichen Kanten K3, K4 können insbesondere beim Heiß-an-heiß-Einbau durch zwei Straßenfertiger 3 nebeneinander relevant sein. Ebenso kann es bereits ausreichend sein, lediglich die vordere Kante K2 als ein Vibrationssignal auslösendes Element zu beachten, um das Einfahren in den noch zu heißen Teil des Straßenbelags 9 zwischen der Einbaubohle 7 und dem Walzvorgabefeld 15 zu verhindern. Anhand der Position des Verdichters 5 kann eine bereits zurückgelegte Walzstrecke W1 und eine verbleibende Walzstrecke W2 ermittelt werden.

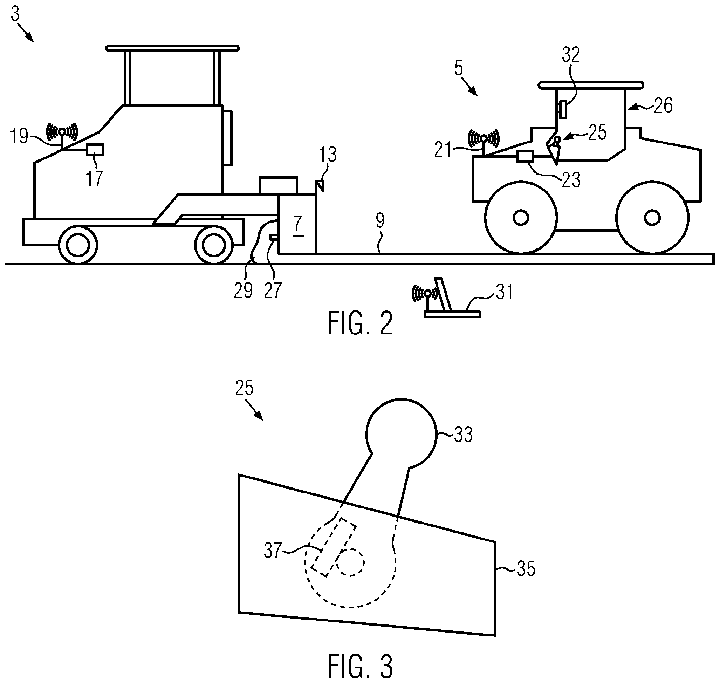

Figur 2 zeigt eine seitliche schematische Darstellung eines Asphaltierungssystems 1 umfassend Straßenfertiger 3 und Verdichter 5 in Form eines Walzverdichters. Der Straßenfertiger 3 ist mit einem elektronischen Datenverarbeitungssystem 17 und einem Sender 19 ausgestattet, um Daten zu verarbeiten und mit dem Verdichter 5 auszutauschen. Dazu weist der Verdichter 5 einen Empfänger 21 und ein elektronisches Datenverarbeitungssystem 23 auf. Der Sender 19 kann dabei auch Empfänger und der Empfänger 21 kann dabei auch Sender sein, um Daten in beide Richtungen auszutauschen. Der Empfänger 21 des Verdichters 5 kann gleichzeitig zum Empfang eines GNSS-Signals zur Positionsbestimmung dienen. Es kann dafür aber auch ein extra Empfänger vorhanden sein. Ein Fahrhauptschalter 25, angeordnet auf einem Bedienstand 26 des Verdichters 5, dient zur Bewegungssteuerung und kann beispielsweise in der Art eines Joysticks Vorwärts-, Rückwärts- und seitliche Bewegung kontrollieren.

Zusätzlich zu dem Temperatursensor 13, welcher die Temperatur der eingebauten Straßenbelagschicht 9 misst, ist ein weiterer Sensor 27 an der Einbaubohle 7 angebracht, welcher die Temperatur des noch unverbauten Einbaumaterials 29 misst. Die Berechnung des Walzvorgabefelds 15 kann auch mittels eines externen elektronischen Datenverarbeitungssystems 31 erfolgen. Dieses Datenverarbeitungssystem 31 kann entsprechend in die Datenkommunikation zwischen Fertiger 3 und Verdichter 5 eingebunden sein bzw. eine direkte Kommunikation zwischen Fertiger 3 und Verdichter 5 ersetzen. An dem Verdichter 5, insbesondere am Bedienstand 26, kann eine Anzeige 32 vorhanden sein, welche Informationen zu dem Walzvorgabefeld 15 bzw. der Position des Verdichters 5 und/oder zu einer bereits zurückgelegten Walzstrecke W1 sowie einer verbleibenden Walzstrecke W2, oder andere nützliche Informationen angibt.

Figur 3 zeigt eine seitliche schematische Darstellung eines Fahrhauptschalters 25 umfassend einen Bedienhebel 33 und ein Basisgehäuse 35. In der teilweisen Schnittansicht ist die Vibrationseinheit 37 zu erkennen, welche dazu konfiguriert ist, den Fahrhauptschalter 25 bzw. den Bedienhebel 33 in spürbare Schwingung zu versetzten. Die Vibrationseinheit 37 wird dazu von dem elektronischen Datenverarbeitungssystem 23 des Verdichters 5 angesteuert. Die Vibrationseinheit 37 kann bei der Fertigung des Fahrhauptschalters 25 bereits als integraler Bestandteil vorhanden sein, kann jedoch auch als Nachrüstversion ausgebildet und zum nachträglichen Anbringen geeignet sein.

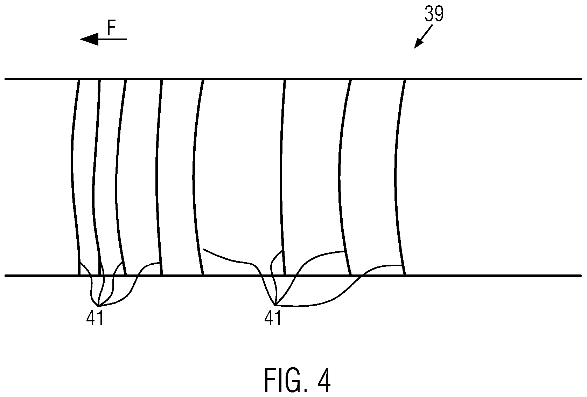

Figur 4 zeigt eine schematische Darstellung eines Temperaturbilds 39 eines Straßenbelags 9. Das Temperaturbild 39 gibt die Temperaturverteilung des Straßenbelags 9 wieder, wozu hier Temperaturlinien 41 dargestellt sind, welche Linien gleicher Temperatur, ähnlich einem Höhenprofil, angeben. Ein solches Temperaturbild 39 kann insbesondere auch Flächen gleicher Temperatur mit jeweils einheitlicher Farbe markieren, wie dies von der Darstellung mittels Wärmebildkamera bekannt ist, wobei hier auf die Datengrundlage hingewiesen werden soll und die Darstellung erst beim Anzeigen, beispielsweise auf der Anzeige 32 des Verdichters 5, relevant ist. Das Temperaturbild 39 kann mit dem Sensor 13 des Straßenfertigers 3, z.B. eine Infrarotkamera, erzeugt werden. Ebenso können jedoch auch nur einzelne Punkte entlang einer Linie parallel zur Fahrtrichtung F detektiert und aufgenommen werden, wobei Temperaturunterschiede in dazu senkrechter Querrichtung vernachlässigt werden, so dass die Temperatur des Straßenbelags 9 im Wesentlichen durch zur Fahrtrichtung F orthogonale und zueinander parallele Temperaturlinien gekennzeichnet ist.

Ausgehend von den oben dargestellten Ausführungsformen der Erfindung sind vielerlei Variationen möglich. So können alle relevanten Berechnungen und Datenverarbeitungsschritte durch das Datenverarbeitungssystem 17 des Fertigers 3, das Datenverarbeitungssystem 23 des Verdichters 5 oder das externe Datenverarbeitungssystem 31 durchgeführt werden. Die Aktualisierung der Daten kann sich auf die erwartbar sich ändernden Daten beschränken, also beispielsweise die seitlichen Ränder K3 und K4 des Walzvorgabefeldes 15 ausnehmen oder in niedrigerer Frequenz aktualisieren. Alle Sensoren, insbesondere die Temperatursensoren 13, 27, können an den Baumaschinen 3, 5 angeordnet sein, können jedoch auch extern vorhanden sein, beispielsweise in Form einer mobilen Wärmebildkamera oder eines Lasermessgeräts, welche dazu auf Stativen neben dem Straßenbelag 9 aufgestellt und mit GNSS-Empfänger ausgestattet sein können.

## Patentansprüche

1. Verfahren zum Fertigen eines Straßenbelags (9) durch einen Straßenfertiger (3) und einen Verdichter (5), umfassend
Einbau eines Straßenbelags (9) mittels einer Einbaubohle (7) des Straßenfertigers (3), Definieren eines Walzvorgabefeldes (15) mittels eines elektronischen Datenverarbeitungssystems (17, 23, 31) anhand eines mittels Simulationsberechnung erzeugten Temperaturbilds (39),
Bestimmen einer Geschwindigkeit und einer Verdichtungsleistung des Verdichters, sowie einer Relativposition des Verdichters (5) in Bezug zu dem Walzvorgabefeld (15), als Betriebsparameter des Verdichters (5),
Erzeugen einer Vibration eines Fahrhauptschalters (25) des Verdichters (5), in Abhängigkeit von der Relativposition des Verdichters (5) zu dem Walzvorgabefeld (15),
und
in Abhängigkeit von der bestimmten Geschwindigkeit und/oder der bestimmten Verdichtungsleistung, wobei ein Vibrationsmuster in Abhängigkeit der Art des Betriebsparameters Relativposition, Geschwindigkeit und Verdichtungsleistung variiert.

2. Verfahren nach Anspruch 1, **dadurch gekennzeichnet, dass** die Bestimmung der Relativposition des Verdichters (5) durch Erfassen eines GNSS-Signals und/oder durch Bestimmen eines Abstands (A1, A2) des Verdichters (5) zu dem Straßenfertiger (3) erfolgt.

3. Verfahren nach einem der vorangegangenen Ansprüche, **dadurch gekennzeichnet, dass** das Walzvorgabefeld (15) mittels eines elektronischen Datenverarbeitungssystems (17) auf dem Straßenfertiger (3) oder eines externen elektronischen Datenverarbeitungssystems (31) definiert wird und an den Verdichter (5) übertragen wird.

4. Verfahren nach einem der vorangegangenen Ansprüche, **dadurch gekennzeichnet, dass** das Walzvorgabefeld (15) anhand eines von durch ein oder mehrere Sensoren (13) ermittelten Temperaturbilds (39) des eingebauten Straßenbelags (9) festgelegt wird.

5. Verfahren nach Anspruch 4, **dadurch gekennzeichnet, dass** zum Festlegen des Walzvorgabefelds (15) das gemessene oder berechnete Temperaturbild (39) mit gespeicherten Temperaturdaten verglichen wird.

6. Verfahren nach einem der vorangegangenen Ansprüche, **dadurch gekennzeichnet, dass** die Temperatur des Einbaumaterials (29) mittels eines Sensors (27) gemessen wird, bevor das Einbaumaterial (29) durch die Einbaubohle (7) des Straßenfertigers (3) eingebaut wird.

7. Verfahren nach einem der vorangegangenen Ansprüche, **dadurch gekennzeichnet, dass** Daten, welche das Walzvorgabefeld (15) darstellen, periodisch auf dem Verdichter (5) aktualisiert werden.

8. Verfahren nach einem der vorangegangenen Ansprüche, **dadurch gekennzeichnet, dass** die Vibration des Fahrhauptschalters (25) mehrere Vibrationsmuster und/oder -stärken umfasst, welche in Abhängigkeit von der Relativposition des Verdichters (5) zu dem Walzvorgabefeld (15) erzeugt werden.

9. Verfahren nach einem der vorangegangenen Ansprüche, **dadurch gekennzeichnet, dass** mittels einer an dem Verdichter (5) angeordneten Anzeige (32) optische Informationen zur Position des Verdichters (5) und/oder zu einer verbleibenden Walzstrecke (W2) und/oder zu einer bereits zurückgelegten Walzstrecke (W1) angezeigt werden.

10. Verfahren nach einem der vorangegangenen Ansprüche, **dadurch gekennzeichnet, dass** ein oder mehrere Betriebszustände des Verdichters (5), insbesondere eine Antriebsgeschwindigkeit, in Abhängigkeit von der Relativposition des Verdichters (5) zu dem Walzvorgabefeld (15) automatisch gesteuert werden.

11. Asphaltierungssystem (1) umfassend einen Straßenfertiger (3) und einen Verdichter (5), wobei der Straßenfertiger (3) eine Einbaubohle (7) umfasst, welche dazu konfiguriert ist, einen Straßenbelag (9) einzubauen, und der Straßenfertiger (3) des Weiteren einen Temperatursensor (13), welcher ausgebildet ist, eine Temperatur des eingebauten Straßenbelags (9) zu messen, und ein elektronisches Datenverarbeitungssystem (17), welches dazu konfiguriert ist, ein Walzvorgabefeld (15) zu bestimmen, und einen Sender (19), welcher dazu ausgebildet ist, die Daten des Walzvorgabefelds (15) an den Verdichter (5) zu übertragen, umfasst, und der Verdichter (5) einen Empfänger (21) zum Empfangen der Daten und einen Fahrhauptschalter (25) umfasst, **dadurch gekennzeichnet, dass** der Fahrhauptschalter (25) des Verdichters (5) eine Vibrationseinheit (37) umfasst, welche dazu konfiguriert ist, basierend auf den Daten des Walzvorgabefelds (15) angesteuert zu werden und in Abhängigkeit von einer bestimmten Relativposition des Verdichters (5) zu dem Walzvorgabefeld (15) sowie von einer bestimmten Geschwindigkeit und/oder einer bestimmten Verdichtungsleistung des Verdichters (5) angesteuert zu werden, wobei ein Vibrationsmuster des Fahrhauptschalters (25) in Abhängigkeit der Art des Betriebsparameters Geschwindigkeit, Position, Verdichtungsleistung variiert, wobei das elektronische Datenverarbeitungssystem (17) dazu konfiguriert ist, das Walzvorgabefeld (15) anhand eines mittels Simulationsberechnung erzeugten Temperaturbilds (39) festzulegen.

12. Asphaltierungssystem nach Anspruch 11, **dadurch gekennzeichnet, dass** der Verdichter (5) ein elektronisches Datenverarbeitungssystem (23) umfasst, welches dazu konfiguriert ist, die Daten des Walzvorgabefelds (15) zu verarbeiten und Steuerungssignale an die Vibrationseinheit (37) des Fahrhauptschalters (25) zu senden.

13. Verdichter (5) zum Komprimieren eines Straßenbelags (9), umfassend ein elektronisches Datenverarbeitungssystem (23) welches dazu konfiguriert ist, ein Walzvorgabefeld (15) zu bestimmen, einen Bedienstand (26) und einen Fahrhauptschalter (25), **dadurch gekennzeichnet, dass** der Fahrhauptschalter (25) eine Vibrationseinheit (37) umfasst, welche dazu konfiguriert ist, in Abhängigkeit von von dem Datenverarbeitungssystem (23) empfangenen Signalen basierend auf den Daten des Walzvorgabefelds (15) zu vibrieren, wobei das elektronische Datenverarbeitungssystem (23) dazu konfiguriert ist, das Walzvorgabefeld (15) anhand eines mittels Simulationsberechnung erzeugten Temperaturbilds (39) festzulegen, und dazu konfiguriert ist Steuersignale an die Vibrationseinheit (37) des Fahrhauptschalters (25) zu senden, sodass die Vibration des Fahrhauptschalters (25) des Verdichters (5) in Abhängigkeit von einer bestimmten Relativposition des Verdichters (5) in Bezug zu dem Walzvorgabefeld (15) sowie einer bestimmten Geschwindigkeit und/oder einer bestimmten Verdichtungsleistung des Verdichters (5) erzeugt wird, wobei ein Vibrationsmuster in Abhängigkeit der Art des Betriebsparameters Relativposition, Geschwindigkeit und Verdichtungsleistung des Verdichters (5) variiert.

## Claims

1. Method of paving a road surface (9) by a road paver (3) and a compactor (5), comprising
paving a road surface (9) by means of a paving screed (7) of the road paver (3),
defining a target rolling field (15) by means of an electronic data processing system (17, 23, 31) on the basis of a temperature image (39) generated by means of simulation calculation,
determining a speed and a compression power of the compactor (5) as well as a relative position of the compactor (5) in relation to the target rolling field (15), as operating parameters of the compactor (5),
generating a vibration of a main driving switch (25) of the compactor (5), depending on the relative position of the compactor (5) to the target rolling field (15), and depending on the determined speed and/or the determined compression power, wherein a vibration pattern varies depending on the type of operating parameter, relative position, speed and compression power.

2. Method according to claim 1, **characterized in that** the determination of the relative position of the compactor (5) is performed by detecting a GNSS signal and/or by determining a distance (A1, A2) of the compactor (5) to the road paver (3).

3. Method according to one of the preceding claims, **characterized in that** the target rolling field (15) is defined by means of an electronic data processing system (17) on the road paver (3) or an external electronic data processing system (31) and is transmitted to the compactor (5).

4. Method according to one of the preceding claims, **characterized in that** the target rolling field (15) is determined on the basis of a temperature image (39) of the paved road surface (9) determined by one or a plurality of sensors (13).

5. Method according to claim 4, **characterized in that** the measured or calculated temperature image (39) is compared with stored temperature data to determine the target rolling field (15).

6. Method according to one of the preceding claims, **characterized in that** the temperature of the paving material (29) is measured by means of a sensor (27) before the paving material (29) is paved by the paving screed (7) of the road paver (3).

7. Method according to one of the preceding claims, **characterized in that** data representing the target rolling field (15) are periodically updated on the compactor (5).

8. Method according to one of the preceding claims, **characterized in that** the vibration of the main driving switch (25) comprises several vibration patterns and/or intensities which are generated depending on the relative position of the compactor (5) to the target rolling field (15).

9. Method according to one of the preceding claims, **characterized in that** optical information on the position of the compactor (5) and/or on a remaining rolling distance (W2) and/or on a rolling distance (W1) already covered is displayed by means of a display (32) arranged on the compactor (5).

10. Method according to one of the preceding claims, **characterized in that** one or a plurality of operating states of the compactor (5), in particular a drive speed, are automatically controlled as a function of the relative position of the compactor (5) to the target rolling field (15).

11. An asphalt paving system (1) comprising a road paver (3) and a compactor (5), the road paver (3) comprising a paving screed (7) configured to pave a road surface (9), the road paver (3) further comprising a temperature sensor (13) configured to measure a temperature of the paved road surface (9) and an electronic data processing system (17) configured to determine a target rolling field (15), and a transmitter (19) configured to transmit the data of the target rolling field (15) to the compactor (5), the compactor (5) comprising a receiver (21) for receiving the data and a main driving switch (25), **characterized in that** the main driving switch (25) of the compactor (5) comprises a vibration unit (37) configured to be driven based on the data of the target rolling field (15), and be driven depending on a determined relative position of the compactor (5) in relation to the target rolling field (15) as well as on a determined speed and/or determined compression power of the compactor (5), wherein a vibration pattern of the main driving switch (25) varies depending on the type of operating parameter, speed, position, compression power, wherein the electronic data processing system (17) is configured to defining the target rolling field (15) on the basis of a temperature image (39) generated by means of simulation calculation.

12. Asphalt paving system according to claim 11, **characterized in that** the compactor (5) comprises an electronic data processing system (23) configured to process the data of the target rolling field (15) and to send control signals to the vibration unit (37) of the main driving switch (25).

13. A compactor (5) for compressing a road surface (9), comprising an electronic data processing system (23) which is configured to defining a target rolling field (15), an operator station (26), and an main driving switch (25), **characterized in that** the main driving switch (25) comprises a vibration unit (37) configured to vibrate in response to signals received from the data processing system (23) based on the data of the target rolling field (15), wherein the electronic data processing system (23) is configured to defining a target rolling field (15) on the basis of a temperature image (39) generated by means of simulation calculation and is configured to send control signals to the vibration unit (37) of the main driving switch (25), so that the vibration of the main driving switch (25) of the compactor (5) is generated depending on a determined relative position of the compactor (5) in relation to the target rolling field (15) as well as a determined speed and/or a determined compression power of the compactor (5), wherein a vibration pattern varies depending on the type of operating parameter of the compactor (5), relative position, speed and compression power.

## Revendications

1. Procédé de finition d'un revêtement routier (9) grâce à un finisseur routier (3) et un compresseur (5), comprenant les étapes consistant à
poser un revêtement routier (9) au moyen d'une table de réglage (7) du finisseur routier (3),
définir un champ de consigne de laminage (15) au moyen d'un système de traitement de données électronique (17, 23, 31) et à l'aide d'une image de température (39) générée au moyen d'un calcul de simulation,
déterminer une vitesse et une puissance de compactage du compresseur, ainsi qu'une position relative du compresseur (5) par rapport au champ de consigne de laminage (15), sous la forme d'un paramètre de fonctionnement du compresseur (5), générer une vibration d'un interrupteur principal de déplacement (25) du compresseur (5), en fonction de la position relative du compresseur (5) par rapport au champ de consigne de laminage (15), et en fonction de la vitesse déterminée et/ou de la puissance de compactage déterminée, dans lequel un modèle de vibration varie en fonction du type de paramètre de fonctionnement, de la position relative, de la vitesse et de la puissance de compactage.

2. Procédé selon la revendication 1, **caractérisé en ce que** la détermination de la position relative du compresseur (5) est mise en oeuvre grâce à une détection d'un signal GNSS et/ou à une détermination d'une distance (A1, A2) entre le compresseur (5) et le finisseur routier (3).

3. Procédé selon l'une quelconque des revendications précédentes, **caractérisé en ce que** le champ de consigne de laminage (15) est défini au moyen d'un système de traitement de données électronique (17) présent sur le finisseur routier (3) ou d'un système de traitement de données électronique externe (31) et est transmis au compresseur (5).

4. Procédé selon l'une quelconque des revendications précédentes, **caractérisé en ce que** le champ de consigne de laminage (15) est déterminé à l'aide d'une image de température (39), déterminée par un ou plusieurs capteur(s) (13), du revêtement routier (9) posé.

5. Procédé selon la revendication 4, **caractérisé en ce que** l'image de température (39) mesurée ou calculée est comparée aux données de température stockées afin de définir le champ de consigne de laminage (15).

6. Procédé selon l'une quelconque des revendications précédentes, **caractérisé en ce que** la température du matériau d'oeuvre (29) est mesurée au moyen d'un capteur (27) avant que le matériau d'oeuvre (29) ne soit posé par la table de réglage (7) du finisseur routier (3).

7. Procédé selon l'une quelconque des revendications précédentes, **caractérisé en ce que** des données représentant le champ de consigne de laminage (15) sont mises à jour de manière périodique sur le compresseur (5).

8. Procédé selon l'une quelconque des revendications précédentes, **caractérisé en ce que** la vibration de l'interrupteur principal de déplacement (25) comprend plusieurs modèles et/ou forces de vibration qui sont généré(e)s en fonction de la position relative du compresseur (5) par rapport au champ de consigne de laminage (15).

9. Procédé selon l'une quelconque des revendications précédentes, **caractérisé en ce que** des informations optiques sur la position du compresseur (5) et/ou sur une section de laminage (W2) restant à parcourir et/ou sur une section de laminage (W1) déjà parcourue sont affichées au moyen d'un affichage (32) agencé au niveau du compresseur (5).

10. Procédé selon l'une quelconque des revendications précédentes, **caractérisé en ce qu'**un ou plusieurs état(s) de fonctionnement du compresseur (5), en particulier une vitesse d'entraînement, est/sont commandé(s) de manière automatique en fonction de la position relative du compresseur (5) par rapport au champ de consigne de laminage (15).

11. Système d'asphaltage (1) comprenant un finisseur routier (3) et un compresseur (5), dans lequel le finisseur routier (3) comprend une table de réglage (7) qui est configurée pour poser un revêtement routier (9), et le finisseur routier (3) comprend en outre un capteur de température (13) conçu pour mesurer une température du revêtement routier (9) posé, et un système de traitement de données électronique (17) configuré pour déterminer un champ de consigne de laminage (15), et un émetteur (19) conçu pour transmettre les données du champ de consigne de laminage (15) au compresseur (5), et le compresseur (5) comprend un récepteur (21) permettant de recevoir les données et un interrupteur principal de déplacement (25), **caractérisé en ce que** l'interrupteur principal de déplacement (25) du compresseur (5) comprend une unité de vibration (37) configurée pour être commandée en se basant sur les données du champ de consigne de laminage (15) et pour être commandée en fonction d'une position relative déterminée du compresseur (5) par rapport au champ de consigne de laminage (15) et d'une vitesse déterminée et/ou d'une puissance de compression déterminée du compresseur (5), dans lequel un modèle de vibration de l'interrupteur principal de déplacement (25) varie en fonction du type de paramètre de fonctionnement à savoir vitesse, position, puissance de compression, dans lequel le système de traitement de données électronique (17) est configuré pour définir le champ de consigne de laminage (15) à l'aide d'une image de température (39) générée au moyen d'un calcul de simulation.

12. Système d'asphalte selon la revendication 11, **caractérisé en ce que** le compresseur (5) comprend un système électronique de traitement de données (23) configuré pour traiter les données du champ de consigne de laminage (15) et pour envoyer des signaux de commande à l'unité de vibration (37) de l'interrupteur principal de conduite (25).

13. Compresseur (5) permettant de comprimer un revêtement routier (9), comprenant un système de traitement de données électronique (23) configuré pour déterminer un champ de consigne de laminage (15), un poste de commande (26) et un interrupteur principal de déplacement (25), **caractérisé en ce que** l'interrupteur principal de déplacement (25) comprend une unité de vibration (37) configurée pour vibrer en se basant sur les données du champ de consigne de laminage (15) en fonction de signaux reçus du système de traitement de données (23), dans lequel le système de traitement de données électronique (23) est configuré pour définir le champ de consigne de laminage (15) à l'aide d'une image de température (39) générée au moyen d'un calcul de simulation et est configuré pour envoyer des signaux de commande à l'unité de vibration (37) de l'interrupteur principal de déplacement (25) de sorte que la vibration de l'interrupteur principal de déplacement (25) du compresseur (5) est générée en fonction d'une position relative déterminée du compresseur (5) par rapport au champ de consigne de laminage (15) et d'une vitesse déterminée et/ou d'une puissance de compression déterminée du compresseur (5), dans lequel un modèle de vibration varie en fonction du type de paramètre de fonctionnement, à savoir position relative, vitesse et capacité de compression du compresseur (5).
